**Europäisches Patentamt**

**European Patent Office**

**Office européen des brevets**

(19)

(11) Veröffentlichungsnummer: **0 267 548**
**B1**

(12) ## EUROPÄISCHE PATENTSCHRIFT

(45) Veröffentlichungstag der Patentschrift:
01.08.90

(51) Int. Cl.⁵: **B60L 9/22**, H02P 7/63

(21) Anmeldenummer: **87116387.9**

(22) Anmeldetag: **06.11.87**

(54) Einrichtung zur Regelung einer über einen Wechselrichter gespeisten Drehfeldmaschine.

(30) Priorität: **14.11.86 DE 3638945**

(43) Veröffentlichungstag der Anmeldung:
**18.05.88 Patentblatt 88/20**

(45) Bekanntmachung des Hinweises auf die Patenterteilung:
**01.08.90 Patentblatt 90/31**

(84) Benannte Vertragsstaaten:
**AT CH DE FR GB IT LI SE**

(56) Entgegenhaltungen:
**EP-A- 0 059 924**
**FR-A- 2 576 163**

**PATENT ABSTRACTS OF
JAPAN,Band 10,Nr,273 (M518)(2329),17.
September 1986 & JP-A-6198102**

(73) Patentinhaber: **BBC Brown Boveri Aktiengesellschaft,
Kallstadter Strasse 1, D-6800 Mannheim 31(DE)**

(72) Erfinder: **Steuerwald,Gerhard,Dipl.-Ing., Rotdornweg 15,
D-6800 Mannheim 1(DE)**

(74) Vertreter: **Rupprecht, Klaus, Dipl.-Ing. et al, c/o BBC
Brown Boveri Aktiengesellschaft ZPT
Postfach 100351 Kallstadter Strasse 1,
D-6800 Mannheim 1(DE)**

## Beschreibung

Die Erfindung bezieht sich auf eine Einrichtung zur Regelung einer über einen Wechselrichter gespeisten Drehfeldmaschine gemäß dem Oberbegriff des Anspruchs 1 und findet vorzugsweise Anwendung bei direkt am Gleichspannungsfahrdraht betriebenen Schienenfahrzeugen bzw. Nahverkehrsfahrzeugen.

Eine solche Einrichtung zur Regelung einer über einen Wechselrichter gespeisten Drehfeldmaschine ist aus der FR-A 2 576 163 bekannt.

Eine Einrichtung zur Regelung einer über einen Wechselrichter gespeisten Drehfeldmaschine unter Vorgabe eines Drehmoment-Sollwertes ist aus der DE-OS 3 438 504 bekannt. Dort dienen die Amplituden der Ständerfluß-Komponenten als Istwerte eines Flußregelkreises und ein Flußregler verstellt durch direkte Vorgabe des Schaltzustandes des Wechselrichters die Phasenlage und Frequenz des Wechselrichter-Ausgangsspannungssystems in Abhängigkeit eines vorgegebenen Ständerfluß-Sollwertes. Diese Führungsgröße kann z. B. von einer Drehmomentregelung abgeleitet werden. Ferner ist vorgesehen, das Drehmoment der Maschine zu bilden und als Istwert eines Drehmomentregelkreises heranzuziehen, wobei ein Drehmomentregler durch Zwischentakten die Amplitude und Frequenz des Wechselrichter-Ausgangsspannungssystems in Abhängigkeit eines vorgegebenen Drehmoment-Sollwertes verstellt.

Bei Einsatz dieses bekannten Wechselrichters für den Antrieb von Schienenfahrzeugen, die direkt am Gleichspannungsfahrdraht betrieben werden, ergeben sich Probleme im Hinblick auf die verwendeten Signalanlagen zur Gleisfreimeldung. Viele Bahngesellschaften arbeiten bei diesen Signalanlagen außer im Tonfrequenzbereich auch mit niederfrequenten Signalströmen von wenigen Hertz bis zu ca. 150 Hz, z.B. mit 50 Hz, 75 Hz, 100 Hz, 132 Hz. Dabei wird an einem Ende eines Gleichstromkreis-Abschnittes über einen Transformator z.B. ein 100-Hz-Nutzsignal (Signalstrom) eingespeist und am anderen Ende wieder durch einen Transformator mit nachgeschalteter Empfangseinrichtung entnommen. Die Empfangseinrichtung prüft, ob das ermittelte Nutzsignal bezüglich Frequenz, Amplitude und Phasenlage im vorgegebenen Toleranzrahmen liegt. Befindet sich mindestens ein Fahrzeugradsatz im Abschnitt, dann wird das Nutzsignal stark gedämpft, worauf die Empfangseinrichtung das Gleis als besetzt erkennt.

Stromanteile in Fahrleitung und den Schienen (Rückleiter) im Bereich der Signalfrequenz des Nutzsignales dürfen daher einen bestimmten Pegel (im allgemeinen wenige 100 Milliampere) nicht überschreiten, da sonst die vorhandene Gleisbesetzmeldung aufgehoben werden kann. Die Folge davon kann eine unerlaubte Signalumstellung sein.

Netzrückwirkungen der Fahrzeuge im niederfrequenten Bereich lassen sich ohne entsprechende Maßnahmen nur schwer vermeiden und stellen eine Gefahr für das Nutzsignal dar. Maßnahmen zur Reduzierung möglicher Störströme im Bereich des Nutzsignales können passiver oder aktiver Natur sein. Als passive Filter kommen LC-Filter in Frage mit den Nachteilen eines hohen Gewichtes und unerwünschter Resonanzstellen zusammen mit dem Fahrleitungsnetz. In Verbindung mit Eingangsstellern sind aktive Bedämpfungseinrichtungen bekannt, z. B. eine 100-Hz-Antiregelung bei der Lokomotivbaureihe E 120 über den eingangsseitigen Vierquadrantensteller (siehe z.B. Elektrische Bahnen 81 (1983), H.7, S. 216–226).

Aus der FR-A 2 576 163 sind ein Verfahren und eine Einrichtung zur Abschwächung störender Oberwellenströme bekannt. Dabei wird eine Drehfeldmaschine über einen Gleichstromsteller und einen Wechselrichter aus einem Gleichstromnetz gespeist. Ein dem vor dem Steller fließenden Gleichstrom entsprechendes Signal wird erfaßt, über ein Bandpaßfilter geführt und gegenphasig zum Stromsollwert addiert. Das so gebildete Signal wird um ein dem erfaßten Gleichstrom entsprechendes Istwertsignal vermindert und einem Regler zur Ansteuerung des Gleichstromstellers zugeleitet.

Der Erfindung liegt davon ausgehend die Aufgabe zugrunde, eine Einrichtung zur Regelung einer über einen Wechselrichter gespeisten Drehfeldmaschine der eingangs genannten Art anzugeben, die es gestattet, bei Fahrzeugen ohne Eingangsstromrichter – also bei Betrieb des Wechselrichters direkt am Gleichspannungsfahrdraht – niederfrequente Störströme im Frequenzbereich von Nutzsignalen auf zulässige Werte zu unterdrücken.

Diese Aufgabe wird in Verbindung mit den Merkmalen des Oberbegriffes erfindungsgemäß durch die im Kennzeichen des Anspruchs 1 angegebenen Merkmale gelöst.

Die mit der Erfindung erzielbaren Vorteile bestehen insbesondere darin, daß der auf die angegebene Art durch eine zusätzliche Einrichtung in der Fahrmotorregelung modulierte Momentensollwert einen Wechselstromanteil im Fahrdrahtstrom bewirkt, der dem ursächlichen Störstrom entgegenwirkt. Die auftretenden Störströme können auf derart geringe, ungefährliche Werte herabgesetzt werden, wie es von Fahrzeugen mit aktiver Störunterdrückung über den Eingangssteller (z. B. Vierquadrantensteller) bekannt ist.

Eine vorteilhafte Ausgestaltung der Erfindung ist im Unteranspruch gekennzeichnet.

Die Erfindung wird nachstehend anhand des in den Zeichnungen dargestellten Ausführungsbeispieles erläutert. Es zeigen:

Figur 1 Einen am Gleichspannungsfahrdraht betriebenen Wechselrichter mit Steuer- und Regeleinrichtung,

Figur 2 ein beispielhaftes stationäres Motorstrom-Spektrum,

Figur 3 ein beispielhaftes stationäres Gleichstrom-Spektrum,

Figur 4 ein beispielhaftes Peak-hold-Spektrum des Fahrdrahtstromes ohne Störstrom-Unterdrückung,

Figur 5 ein beispielhaftes Peak-hold-Spektrum des Fahrdrahtstromes mit Störstrom-Unterdrückung.

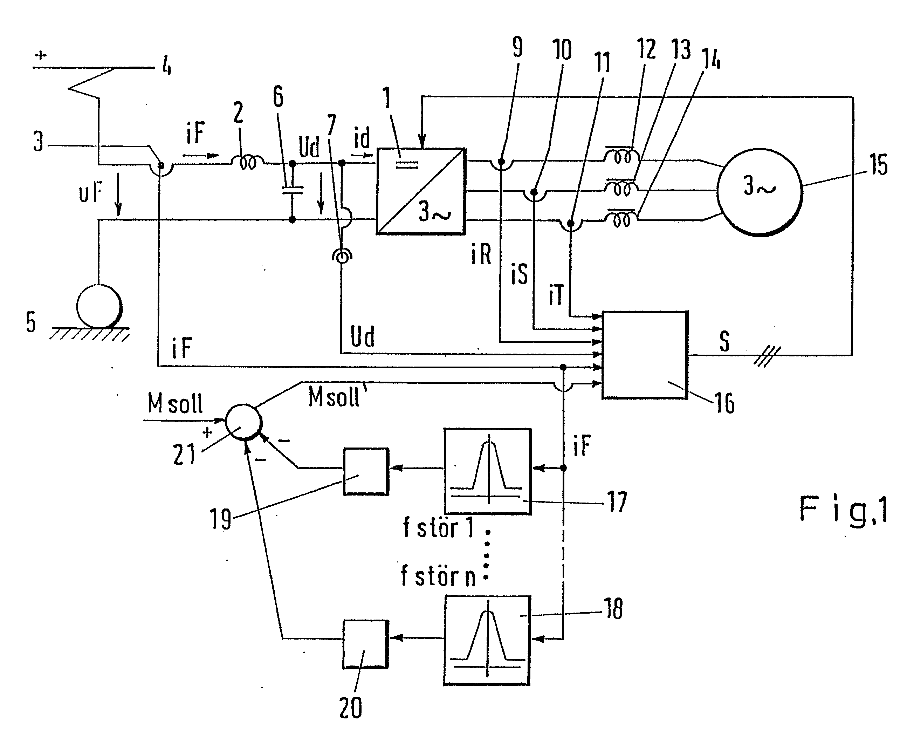

In Figur 1 ist ein am Gleichspannungsfahrdraht betriebener Wechselrichter mit Steuer- und Regeleinrichtung dargestellt. Der Wechselrichter 1 (vorzugsweise GTO-Wechselrichter) liegt mit seinem positiven Anschluß über einer Drossel 2 und einer Stromerfassungseinrichtung 3 am Gleichspannungsfahrdraht 4 (= positiver Pol der Gleichspannungsquelle). Der negative Anschluß des Wechselrichters 1 ist mit der Schiene 5 (= negativer Pol der Gleichspannungsquelle) verbunden. Zwischen den Anschlüssen des Wechselrichters 1 ist ein Kondensator 6 angeordnet. Zur Erfassung der Gleichspannung Ud zwischen den Eingangsklemmen des Wechselrichters 1 ist eine Spannungserfassungseinrichtung 7 vorgesehen. Die Fahrdrahtspannung zwischen Gleichspannungsfahrdraht 4 und Schiene 5 ist mit UF bezeichnet. Der mit Hilfe der Stromerfassungseinrichtung 3 ermittelte Fahrdrahtstrom ist mit iF und der in den Wechselrichter 1 fließende Gleichstrom ist mit id bezeichnet.

Die Drehspannungsausgänge des Wechselrichters 1 sind über Stromerfassungseinrichtungen 9 bzw. 10 bzw. 11 zur Ermittlung der Motorströme iR bzw. iS bzw. iT sowie über Drosseln 12 bzw. 13 bzw. 14 mit einer Drehfeldmaschine 15 (Asynchronmaschine) als Fahrmotor des Schienen- oder Nahverkehrsfahrzeuges beschaltet.

Zur Regelung des Wechselrichters 1 ist eine zentrale Steuer- und Regeleinrichtung 16 (inklusive Steuersatz) vorgesehen. Diese empfängt eingangsseitig die Werte der Motorströme iR, iS, iT, die Gleichspannung Ud, den Fahrdrahtstrom iF sowie einen modulierten Drehmoment-Sollwert Msoll' und gibt ausgangsseitig Schaltbefehle S zur Ansteuerung der Wechselrichterventile ab.

Zur Modulation eines vorgegebenen Drehmoment-Sollwertes Msoll wird der über die Stromerfassungseinrichtung 3 ermittelte Fahrdrahtstrom iF einem oder mehreren parallel geschalteten Bandpaßfiltern 17..18 zugeleitet, wobei die einzelnen Bandpaßfilter jeweils auf eine unterschiedliche Störfrequenz fstör1...fstörn eines zu unterdrückenden Störstromes im Fahrdrahtstrom abgestimmt sind. Das Ausgangssignal eines jeden Bandpaßfilters 17..18 wird jeweils über einen eigenen Regler 19..20 gegenphasig einem gemeinsamen Summationspunkt 21 zugeleitet. Diesem Summationspunkt 21 liegt der Drehmoment-Sollwert Msoll mit positivem Vorzeichen an. Der Summationspunkt 21 bildet den modulierten Drehmoment-Sollwert Msoll' durch Addition von Msoll und den gegenphasigen Regler-Ausgangssignalen und leitet den modulierten Wert der Steuer- und Regeleinrichtung 16 zu.

Der so modulierte Drehmoment-Sollwert bewirkt einen Wechselstromanteil im Fahrdrahtstrom, der dem ursächlichen Störstrom entgegenwirkt (aktive Unterdrückung).

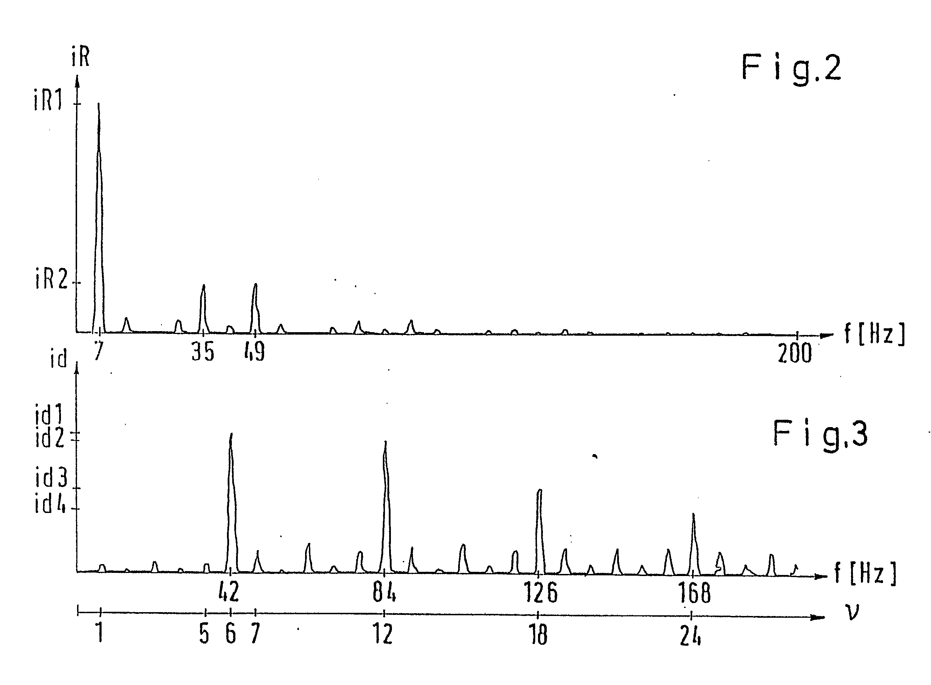

Bei den Entstehungsmechanismen niederfrequenter Störströme muß grundsätzlich zwischen systemeigenen und systemfremden Störströmen unterschieden werden. Zu den systemeigenen Spektrallinien gehören z. B. bei der Einrichtung nach der DE-OS 34 38 504 Anteile, die unter anderem auf das Vorhandensein der sechsfachen Fahrmotor-Grundschwingung im Eingangsstrom durch nichtsinusförmigen Strom zurückzuführen sind. Dies ergibt z. B. bei einer Sinus-Grundschwingungsfrequenz von 42 Hz/6 = 7 Hz einen starken spektralen Fahrdrahtstrom von 42 Hz. In den Figuren 2 bzw. 3 sind hierzu das stationäre Motorstrom-Spektrum bzw. das stationäre Gleichstrom-Spektrum dargestellt, wie es z. B. bei Einsatz der Einrichtung nach der DE-OS 34 38 504 auftritt.

In Figur 2 ist der Effektivwert des Motorstromes iR in Abhängigkeit der Frequenz f (Störfrequenz) des Störstromes dargestellt. Es ergibt sich beispielsweise ein ausgeprägter Störstrom iR1 mit der Frequenz f=7 Hz. Weitere Störströme mit dem Wert iR2 ergeben sich bei den Frequenzen f=35 bzw. 49 Hz.

In Figur 3 ist der Effektivwert des Gleichstroms id in Abhängigkeit der Frequenz f (Störfrequenz) des Störstromes dargestellt. Es ist jeweils auch die Ordnungszahl der Oberschwingung von id vermerkt. Es ergibt sich ein ausgeprägter Störstrom id1 bei Frequenz f=42 Hz (v = 6). Weitere Störströme id2 bzw. id3 bzw. id4 ergeben sich bei den Frequenzen f=84 Hz (v = 12) bzw. f=126 Hz (v = 18) bzw. f=168 Hz (v = 24).

Zu den systemeigenen Störströmen zählen auch z. B. durch steuerseitige Mängel (Amplituden und/oder Zeitfehler) bedingte Unsymmetrien im Drehspannungssystem. Diese führen beispielsweise zu Stromanteilen mit Grundschwingungsfrequenz.

Als systemfremde Störströme kommen unter anderem antriebsseitige mechanische Schwingungen im bereich Drehgestell-Fahrmotor-Schiene in frage. Diese führen zur Amplitudenmodulation des Fahrdrahtstroms im Niederfrequenzbereich (einige 10 Hz).

Zu den systemfremden Störströmen zählen auch Anteile aus dem Fahrleitungsnetz, die von der stromerzeugenden Einrichtung, anderen Fahrzeugen oder Resonanzstellen im Fahrleitungsnetz entstehen können.

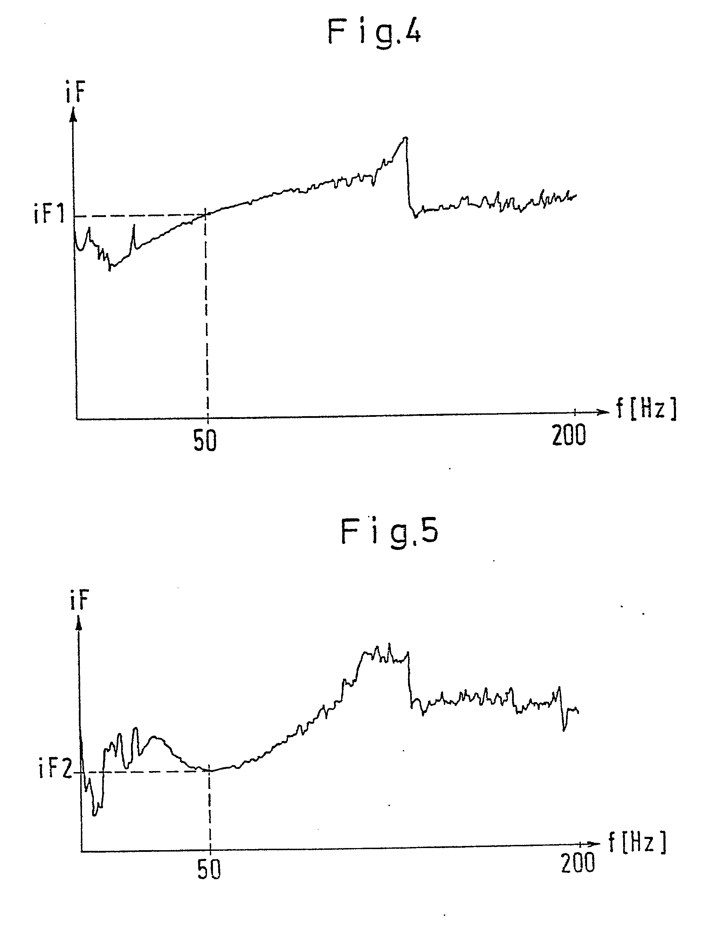

Beide Fälle werden von der erfindungsgemäßen Einrichtung beherrscht. Die Figuren 4 und 5 zeigen hierzu Peak-hold-Spektren einer Beschleunigungsfahrt bis in den Grundfrequenzbereich bei Einsatz der Einrichtung nach der DE-OS 34 38 504.

In Figur 4 ist der Effektivwert des Gleichstromes iF in Abhängigkeit der Frequenz f (Störfrequenz) dargestellt, und zwar ohne Einsatz der erfindingsgemäßen Einrichtung, d. h. ohne Störstrom-Unterdrückung (aufgenommen über Peak-hold bei Anfahrt mit einer Frequenz der Drehfeldmaschine f1 = 0..25 Hz). Bei einer Frequenz f=50 Hz (Störfrequenz) ergibt sich z. B. ein Störstrom iF1.

In Figur 5 ist der Effektivwert des Gleichstromes iF in Abhängigkeit der Frequenz f (Störfrequenz) dargestellt, wobei ein 50 Hz-Hunterdrückung gemäß der beschriebenen Einrichtung eingesetzt ist (fstör1 des Bandpaßfilters 17: 50 Hz). Bei einer Frequenz f=50 Hz (Störfrequenz) ergibt sich ein Störstrom mit im Vergleich zu iF1 reduziertem Wert iF2. Erkennbar ist der Frequenzgang des Bandpaßfilters mit einer Flankensteilheit von 18 dB/Oktave im Bereich der Störfrequenz.

Die Abschwächung wurde im vorleigenden Fall auf ca 6 dB eingestellt. Dies entspricht in etwa der Abschwächung der starken sechsten Oberschwingung des Motorstromes bei der Einrichtung nach der DE-OS 34 38 504, die sich aus physikalischen Gründen (die Bahnkurve des Flußraumzeigers gleicht einem Sechseck) nicht beliebig abschwächen läßt. Wird diese sechseckförmige Bahnkurve des Flußraumzeigers durch eine kreisförmige Bahnkurve ersetzt, können Störströme erreicht werden, wie sie von den Fahrzeugen mit aktiver Störunterdrückung über den Eingangssteller bekannt sind.

Die beschriebene Einrichtung funktioniert nur, wenn das Übertragungsverhalten iF/Msoll einen ausreichenden Frequenzgang aufweist. Eine mit der Einrichtung nach der DE-OS 34 38 504 realisierte Fahrmotorregelung bringt diese wesentliche Voraussetzung mit.

Eine weitere wichtige Voraussetzung besteht darin, daß im Bereich der Signalfrequenzen keine markanten systemeigenen Anteile im iF-Spektrum vorhanden sind, wie z. B. mit einfacher oder sechsfacher Grundschwingungsfrequenz. Dies bedeutet unter anderem, daß bis zu der durch sechs dividierten Störfrequenz sinusförmige Motorströme erforderlich sind. Die Figuren 2 und 3 zeigen Motorstrom- und Gleichstromspektrum bei trapezförmiger Spannungsvorgabe, d. h. sechseckförmigen Verlauf des Flußraumzeigers. Dadurch entstehen die markanten id-Ströme mit den Ordnungszahlen $\nu = 6$, 12, 18... Mit dem bei der Einrichtung nach der DE-OS 34 38 504 darüberhinaus vorgesehenen kreisförmigen Flußraumzeiger im unteren Frequenzbereich und damit sinusförmigen Strömen entstehen diese spektralen id-Anteile nicht.

## Patentansprüche

1. Einrichtung zur Regelung einer über einen Wechselrichter gespeisten Drehfeldmaschine, wobei der dem Wechselrichter eingangsseitig vom Fahrdraht ohne zusätzlichen Eingangsstromrichter zugeführte Gleichstrom einem Bandpaßfilter (17) zur Filterung einer zu unterdrückenden Störfrequenz (fstör 1) zugeleitet wird, dadurch gekennzeichnet, daß das Ausgangssignal des Bandpaßfilters (17) über einen Störstromregler (19) gegenphasig direkt zum Drehmoment-Sollwert (Msoll) addiert wird.

2. Einrichtung nach Anspruch 1, dadurch gekennzeichnet, daß mehrere Bandpaßfilter (17, 18) mit jeweils nachgeschalteten Störstromreglern (19, 20) zur Filterung mehrerer zu unterdrückender Störfrequenz (fstör 1, fstör n) parallel geschaltet sind.

## Claims

1. Device for controlling a polyphase machine supplied via an inverter, the direct current fed on the input side from the contact wire to the inverter without an additional input current converter being supplied to a bandpass filter (17) to filter a disturbance frequency (fstör 1) to be suppressed, characterized in that the output signal of the bandpass filter (17) is added directly in antiphase to the desired torque value (Msoll) via a disturbing current controller (19).

2. Device according to Claim 1, characterized in that a plurality of bandpass filters (17, 18) each having downstream disturbing current controllers (19, 20) are connected in parallel to filter a plurality of disturbance frequencies (fstör 1, fstör n) to be suppressed.

## Revendications

1. Dispositif pour la régulation d'une machine à champ tournant alimentée en passant par un onduleur, dans lequel le courant continu amené à l'onduleur, côté entrée depuis le fil de contact, sans passer pour un redresseur d'entrée supplémentaire, est appliqué à un filtre passe-bande (17) en vue de l'élimination par filtrage d'une fréquence parasite (fstör1) à supprimer, caractérisé par le fait que le signal de sortie du filtre passe-bande (17) est additionné, en passant par un régulateur de courant parasite (19), additionné en opposition de phase directement à la valeur de consigne de couple (Msoll).

2. Dispositif suivant la revendication 1, caractérisé par le fait que plusieurs filtres passe-bande (17, 18) suivis chacun d'un régulateur de courant parasite (19, 20) sont montés en parallèle pour l'élimination par filtrage de plusieurs fréquences parasites (fstör1, fstör n) à supprimer.

Fig.1

EP 0 267 548 B1

EP 0 267 548 B1

Fig.2

Fig.3

# Fig.4

# Fig.5